# DEMANDE DE BREVET EUROPEEN

(11) **EP 1 217 487 A1**
(43) Date de publication de la demande: **26.06.2002**
(21) Numéro de dépôt: 00870322.5
(22) Date de dépôt: 22.12.2000
(51) Int. Cl.: G05D 1/03, G05D 1/02, G05D 1/00, B62D 1/28

(54) **Procédé de guidage**

(71) Demandeur: Furnelle Jacques, 4053 Embourg (BE)
(72) Inventeur: Furnelle Jacques, 4053 Embourg (BE)
(74) Mandataire: Powis de Tenbossche, Roland

(57) **Abrégé**

Procédé de guidage d'un robot mobile au moyen d'au moins un dispositif de localisation mobile,
- dans lequel ledit robot (2) amène en un point prédéterminé d'une première zone de travail le dispositif de localisation (3),
- dans lequel le robot (2) se sépare du dispositif de localisation (3),
- dans lequel on effectue un travail selon un parcours déterminé dans la première zone de travail par rapport au dispositif de localisation (3) placé audit point prédéterminé,
- dans lequel on amène le robot (2) en fin de travail au voisinage du point déterminé de la première zone,
- dans lequel le robot (2) s'associe au dispositif de localisation (3) et l'amène en un point déterminé d'une deuxième zone de travail,
- dans lequel le robot (2) se sépare du dispositif de localisation (3), et
dans lequel on effectue un travail selon un parcours déterminé dans la deuxième zone de travail par rapport au dispositif de localisation (3) placé audit point prédéterminé.

## Description

La présente invention a pour objet un procédé de guidage mobile au moyen d'au moins un dispositif de localisation. En particulier, l'invention a pour objet un procédé de guidage d'un robot en milieu extérieur, par exemple pour exercer un travail de nature agricole ou d'entretien ou de pulvérisations de produits, par exemple de coupe d'un gazon ou d'une prairie et/ou de ramassage de feuilles et/ou herbes coupées, en particulier pour terrain de golf. Le procédé selon l'invention est un procédé adapté pour le travail de plusieurs zones de travail de grande surface par rapport à la distance séparant lesdites zones entre elles.

On connaît par le document US 5.974.347 une méthode pour contrôler le fonctionnement d'un véhicule automatique pour la coupe d'une zone de gazon. Dans cette méthode, on place tout autour de la zone à tondre des émetteurs pour déterminer la position du véhicule. Une telle méthode est coûteuse car elle nécessite l'emploi d'une série d'émetteurs pour chaque zone de travail.

On connaît par le document US 5.461.292 un véhicule de coupe avec mode de fonctionnement manuel et automatique. En mode automatique une antenne est placée autour de la zone de travail, ladite antenne émettant des signaux de contrôle vers le véhicule de coupe.
Le placement de l'antenne est manuel et n'est pas effectué de manière automatique. Le véhicule de coupe n'est pas à même de déplacer l'antenne d'une zone vers une autre zone de coupe.

La présente invention vise un procédé permettant de couper deux zones distinctes au moyen d'un robot de coupe utilisant un dispositif de localisation, ledit robot transportant le dispositif de localisation d'un point de la première zone vers un autre point prédéterminé de la deuxième zone et se séparant du dispositif de localisation, après que ce dernier soit placé en un point déterminé. Ce procédé permet donc de manière automatisé, d'utiliser un même dispositif de localisation pour la coupe de zones distinctes.

Bien que le procédé selon l'invention s'applique en particulier à la coupe de gazon, il est clair que le procédé peut s'appliquer à d'autres domaines, tels que des travaux dans des champs et des travaux de ramassage de feuilles, des travaux de nettoyage de places, des travaux d'épandage, des travaux d'entretien de piste de ski, etc.

Le procédé suivant l'invention est un procédé de guidage d'un robot mobile au moyen d'au moins un dispositif de localisation mobile,
- dans lequel ledit robot amène en un point prédéterminé d'une première zone de travail le dispositif de localisation,
- dans lequel le robot se sépare du dispositif de localisation,
- dans lequel on effectue un travail selon un parcours déterminé dans la première zone de travail par rapport au dispositif de localisation placé audit point prédéterminé,
- dans lequel on amène le robot en fin de travail au voisinage du point déterminé de la première zone,
- dans lequel le robot s'associe au dispositif de localisation et l'amène en un point déterminé d'une deuxième zone de travail,
- dans lequel le robot se sépare du dispositif de localisation, et
- dans lequel on effectue un travail selon un parcours déterminé dans la deuxième zone de travail par rapport au dispositif de localisation placé audit point prédéterminé.

De façon avantageuse, le robot amène le dispositif de localisation en un point d'une zone de travail qui est prédéterminé par un système de référence, de préférence un système de référence enterré. Selon une variante possible, le point où le dispositif de localisation est amené est déterminé par GPS ou GPS différentiel. De préférence, on calibre le dispositif de localisation en ce point. Cette calibration est avantageusement effectuée par un déplacement du robot vers un autre point de position connue ou point de référence.

De préférence, on utilise pour chaque zone de travail un système de référence situé au point auquel le dispositif de localisation doit être placé ou au point auquel le robot associé au dispositif de localisation s'arrête pour placer le dispositif de localisation ou pour se séparer du dispositif de localisation.

En particulier, on contrôle le mouvement du robot associé au dispositif de localisation entre le point de référence ou le système de référence d'une première zone et le point de référence ou le système de référence d'une deuxième zone au moyen d'un système de filoguidage, de préférence enterré. Par exemple, le système de référence de chaque zone de travail est formé par au moins une boucle, de préférence au moins deux boucles du système de filoguidage.

Pour assurer le déplacement du robot d'une zone vers une autre, il est également possible d'utiliser des équipements du type odométriques (tels gyromètre, odomètre, etc.) qui sont aptes à fournir une direction de référence, et/ou une ou des cibles auxiliaires mobiles.

Selon une forme de réalisation préférée, le parcours de chaque zone de travail par rapport au point prédéterminé est prédéfini ou prémémorisé. Par exemple, ces parcours sont prémémorisés dans une mémoire que comporte le robot ou dans une mémoire d'un dispositif envoyant des signaux de commande vers le robot.

De façon avantageuse, on calibre au moins l'orientation du dispositif de localisation placé dans une zone, ce calibrage de l'orientation peut être effectué en déplaçant le robot mobile (par rapport au dispositif de localisation) vers un point ou un système de référence, en particulier d'une autre zone. Ce point de référence peut par exemple être déterminé par un détecteur de proximité (par exemple détectant une référence enterrée), mais pourrait également être déterminé par GPS [le robot restant alors immobile pendant un temps suffisant pour déterminer une position aussi correcte que possible, en un point d'une zone (en particulier d'une zone distincte de la zone dans laquelle le dispositif de localisation est placé) éloigné du point où se trouve le dispositif de localisation]. Ce calibrage peut le cas échéant également être effectué au moyen d'au moins deux références de position connue ou au moyen d'au moins deux dispositifs de localisation mobiles placés en des positions différentes. Le calibrage peut alors être effectué par exemple par triangulation ou par trilatération.

Selon une caractéristique d'un procédé suivant l'invention, le robot déplace une cible auxiliaire hors de la zone dans laquelle le dispositif de localisation est placé. Une telle cible peut être utile pour calibrer l'orientation du dispositif de localisation et/ou pour guider le robot mobile après avoir effectué un travail dans une zone, par exemple après avoir effectué un travail dans une zone et s'être associé au dispositif de localisation, et/ou à contrôler l'orientation du dispositif de localisation. La cible auxiliaire permet avantageusement un déplacement en ligne droite du robot d'un point de référence d'une zone vers le point de référence d'une autre zone.

Selon une particularité d'un procédé suivant l'invention, on détermine une déviation du robot par rapport au dispositif de localisation ou une trajectoire définie par rapport au dispositif de localisation, et on émet un signal de sécurité lorsque la déviation déterminée dépasse une tolérance.

L'invention a encore pour objet un ensemble robotisé pour la mise en oeuvre d'un procédé suivant l'invention, cet ensemble comportant
- un robot mobile muni d'au moins un moyen pour effectuer un travail dans une zone ;
- un dispositif de localisation indépendant du robot mobile ;
- un moyen associé au robot mobile pour associer le dispositif de localisation au robot mobile lors d'un déplacement de ce dernier et pour séparer le dispositif de localisation du robot avant un déplacement du robot,
- un moyen porté par le robot mobile recevant un signal du dispositif de localisation lorsque ledit dispositif n'est pas associé au robot mobile,
- un moyen porté par le robot mobile contrôlant le déplacement du robot dans une zone par rapport au dispositif de localisation lorsque ce dernier est séparé du robot mobile, et
- un moyen porté par le dispositif de localisation ou par le robot, ledit moyen détectant une position particulière d'une zone où le dispositif de localisation est séparé du robot.

Des particularités et détails de formes de réalisation selon l'invention ressortiront de la description détaillée suivante dans laquelle il est fait référence aux dessins ci-annexés.

Dans ces dessins,
- la figure 1 est une vue schématique d'un robot mobile associé à un dispositif de localisation ;
- la figure 2 est une vue schématique du robot de la figure 1 avec le dispositif de localisation juste avant sa séparation ;
- la figure 3 est une vue schématique de zones de travail reliées entre elles par un système filoguidé ;
- les figures 4 à 7 sont des vues schématiques d'étapes du procédé suivant l'invention ;
- la figure 8 est une vue schématique d'un autre robot, ce robot utilisant une cible auxiliaire ;
- la figure 9 est une vue de dessus de la figure 8 ;
- la figure 10 est une vue du robot de la figure 8 avec déplacement de la cible auxiliaire ;
- les figures 11 à 16 sont des vues schématiques d'étapes du procédé utilisant le robot de la figure 8 ;
- les figures 17 à 21 sont des vues schématiques d'un autre procédé suivant l'invention ;
- la figure 22 est une vue schématique d'un dispositif de localisation , et
- la figure 23 est une vue schématique des éléments constituant un ensemble suivant l'invention.

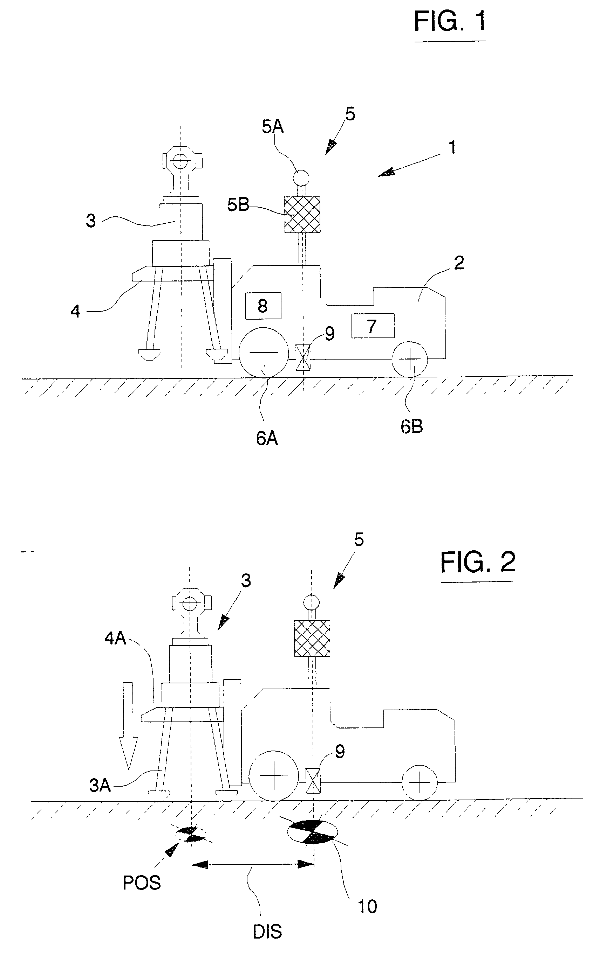

L'ensemble 1 de la figure 1 comporte un robot mobile 2 et un dispositif de localisation 3, le robot mobile 2 comportant un moyen de levage 4 pour porter le dispositif de localisation 3 lors de son déplacememt. Le robot 2 comporte une cible 5 comportant par exemple un point lumineux 5A et un réflecteur 5B. Le robot comporte des roues 6A qui sont commandées par un système de commande 7 et des roues 6B qui sont entraînées en rotation par un moteur 8, par exemple un moteur électrique. Le robot est muni d'un détecteur de proximité 9 destiné à détecter la présence d'une référence 10. Le dispositif de localisation est par exemple un dispositif de localisation de type tachéomètre ou théodolite motorisé, dont la tête est rotative.

Lorsque le robot 2 est situé de manière à ce que le capteur de proximité détecte la référence 10, le robot 2 s'arrête, abaisse les bras de levage 4A, 4B pour que les pattes ou pieds 3A du dispositif de localisation 3 prennent appui sur le sol. Le dispositif 3 est ainsi situé à une distance connue DIS de la référence 10, définissant ainsi une position POS pour le dispositif de localisation 3. Ensuite, le robot effectue une légère marche arrière avec les bras 4A en position abaissée, de sorte que le robot et le dispositif de localisation soient séparés l'un de l'autre. Une fois le dispositif de localisation placé dans une zone de travail, ce dispositif (après son calibrage en orientation) servira de référentiel pour le travail du robot dans la zone de travail.

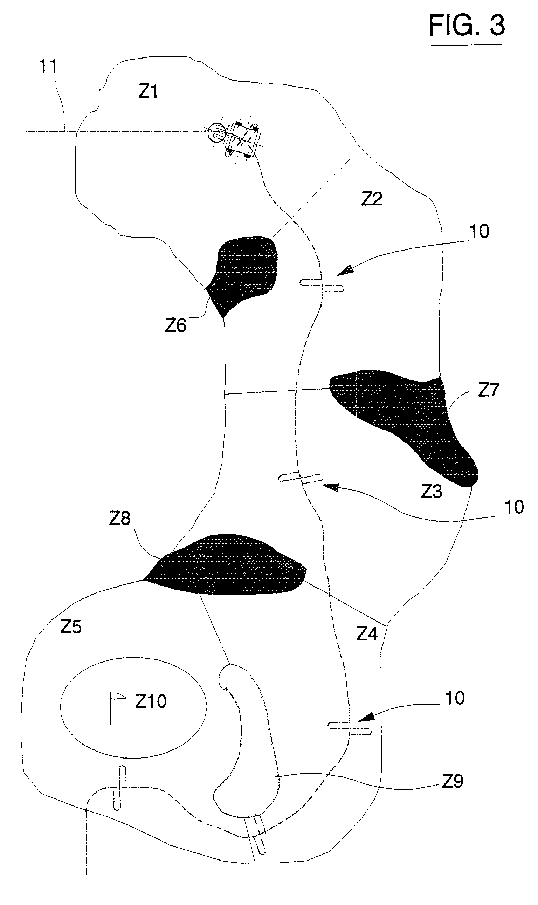

La figure 3 est une vue schématique d'une partie d'un terrain de golf, cette partie qui doit être tondue étant découpée en 5 zones distinctes Z1,Z2,Z3,Z4 et Z5, les zones Z6,Z7 et Z8 étant des zones boisées (à ne pas tondre), la zone Z9 étant un étang, tandis que la zone Z10 est le « green », dont l'entretien est effectué au moyen d'autres engins spécifiques et particuliers, si pas manuellement.

Un fil 11 est enterré et sert à définir un parcours du robot d'une zone vers une autre zone. Ce fil enterré est associé à un système de référence 10 formé par une ou plusieurs boucles enterrées, par exemple deux boucles enterrées. Chaque zone de coupe ou à couper comporte au moins un système de référence 10.

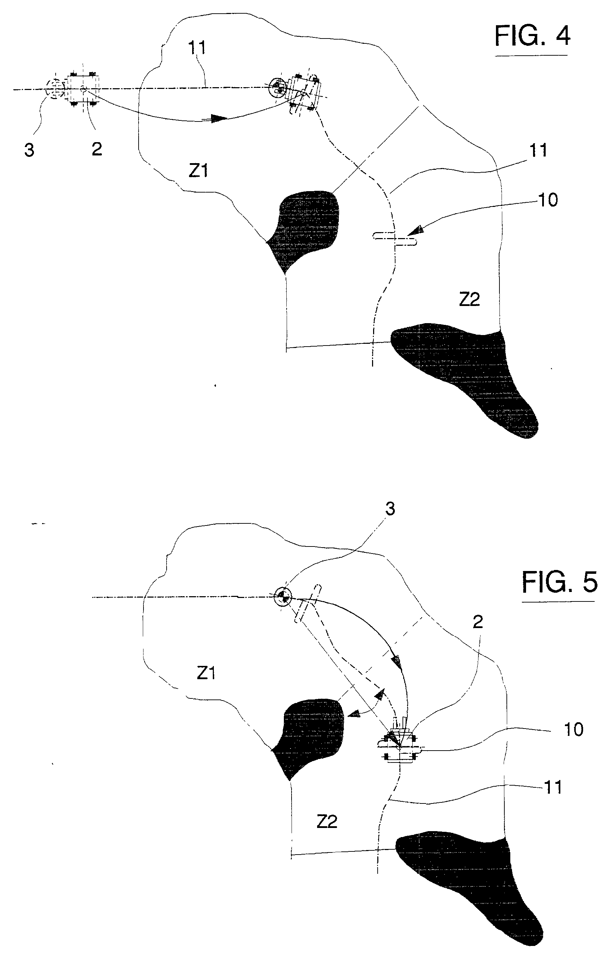

Le fonctionnement du robot 2 + dispositif de localisation s'opère comme suit. Le robot 2 portant le dispositif de localisation 3 suit le fil 11 pour entrer dans la zone Z1. Lorsque le détecteur de proximité 9 du robot est au dessus de la référence 10, le robot 2 s'arrête. Les bras de levage 4A s'abaisse ensuite pour que le dispositif de localisation prenne appui sur le sol. (figure 4)

Le robot 2 continue ensuite à se déplacer le long du fil 11 jusqu'à la référence 10 de la zone Z2. (figure 5) Lorsque le robot est dans cette position, il est possible de calibrer le dispositif de localisation ou de bien déterminer la position angulaire ou orientation du dispositif ou de la tête du dispositif par rapport au site.

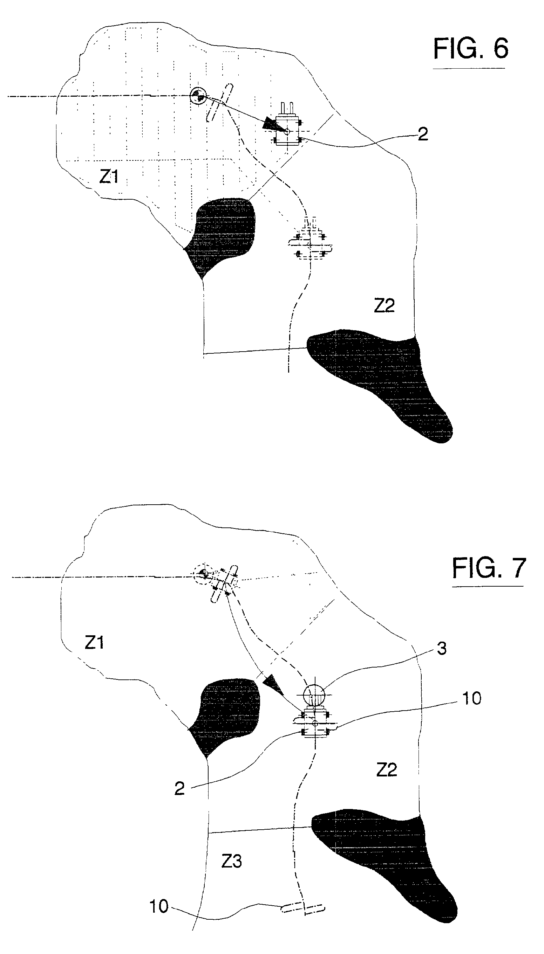

Une fois le dispositif de localisation calibré, le robot se dirige vers la zone Z1 et dans la zone Z1 selon un parcours préprogrammé, par exemple mémorisé dans une mémoire du robot 2. Ainsi, le robot 2 tond la zone Z1 en effectuant une série d'aller-retour. (figure 6) Le guidage du robot est effectué ici au moyen de sa localisation par rapport au dispositif de localisation.

Une fois la coupe de la zone 1 terminée, le robot 2 suit un parcours prédéfini vers le dispositif de localisation 3. Le robot abaisse ses bras de levage 4A,4B et les place entre les pattes du dispositif de localisation. Le robot avance dans cette forme de réalisation en marche arrière par rapport à la position des bras 4A.
Les bras 4A,4B sont ensuite soulevés pour porter le dispositif de localisation, Les pattes du dispositif 3 ne touchent dès lors plus le sol et le dispositif 3 peut être déplacé par le robot 2. (Figure 7) Le robot se déplace alors en marche arrière le long du fil 11 pour amener le robot 2 au dessus de la référence 10 de la zone 2, endroit où le robot dépose le dispositif de localisation 3. Le calibrage du dispositif de localisation se fait alors en déplaçant le robot 2 vers la référence 10 de la zone 3. Après calibrage, le robot effectue la coupe de la zone 2 selon un parcours prédéterminé.

Le procédé se poursuit ainsi de zone en zone de manière automatique.

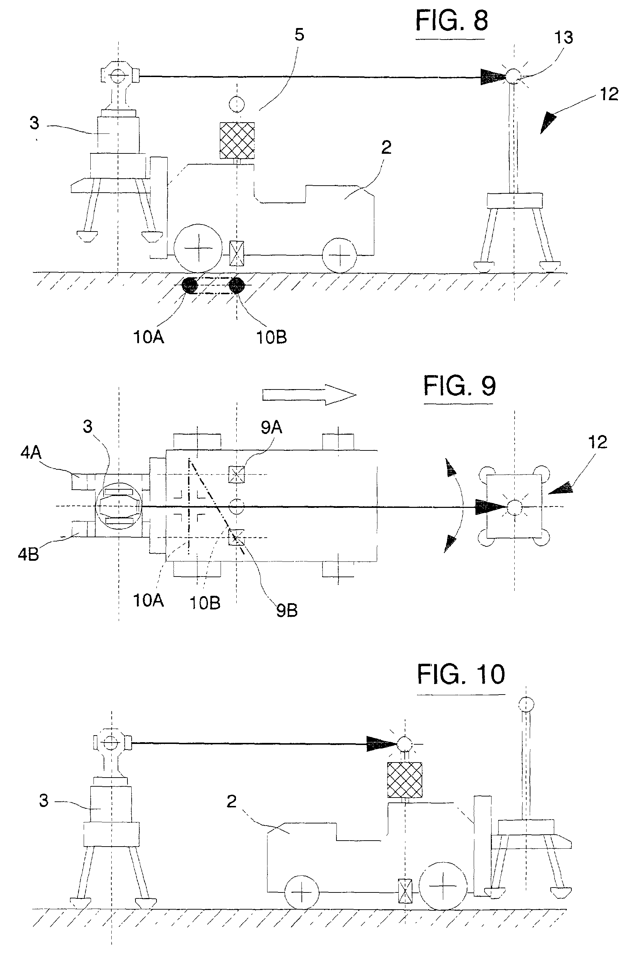

L'ensemble représenté aux figures 8 et 9 est similaire à celui représenté à la figure 1, si ce n'est qu'il comporte une cible auxiliaire 12 comportant un point lumineux 13. La cible auxiliaire 12 est apte à être déplacée par le robot 2. A cette fin, la cible auxiliaire est munie de pattes ou pieds 12A entre lesquels les bras porteurs 4A,4B peuvent être introduits pour soulever et transporter la cible 12.

Le robot est muni de deux capteurs de proximité 9A,9B distants l'un de l'autre d'une distance connue, ce qui permet la détection successive des lignes 10A,10B, de calibrer la position du robot par un calcul de triangulation.

La cible auxiliaire est destinée à assurer un calibrage du dispositif de localisation 3 et/ou un guidage selon une ligne droite du robot avec le dispositif de localisation embarqué vers la cible auxiliaire 12.

A la figure 10, le robot 2 est en position pour transporter la cible auxiliaire 12.

Les étapes du procédé utilisant l'ensemble de la figure 8 sont par exemple les suivantes :

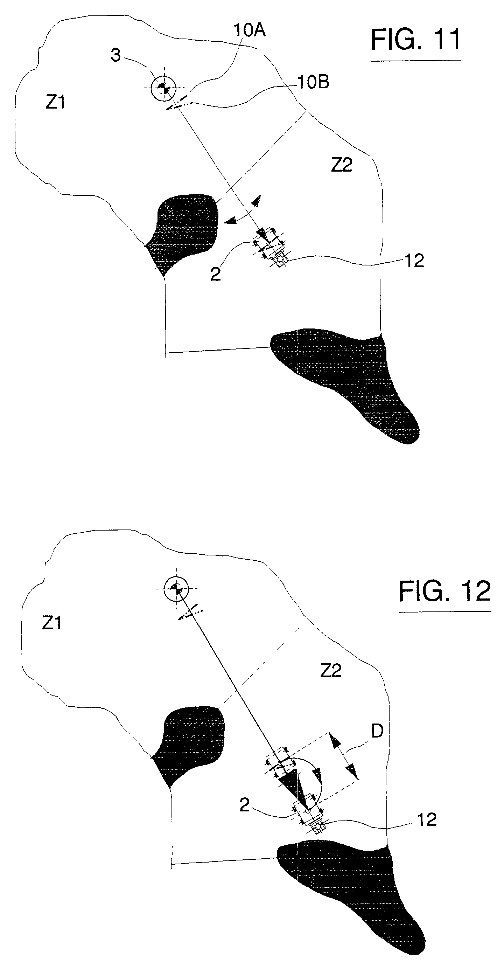

Au départ le dispositif de localisation 3 et le robot mobile 2 (avec cible auxiliaire 12 embarquée) sont calibrés en position, l'un dans la zone Z1, l'autre dans la zone Z2. Ces deux calibrations en position connues du :robot mobile et du dispositif de localisation vont permettre une calibration en orientation du dispositif de localisation. (figure 11)

Une fois cette calibration terminée, on déplace la cible auxiliaire vers une position intermédiaire qui est à la distance D de la position de référence de la zone Z2. (figure 12) Le robot 2 se sépare alors de la cible auxiliaire 12 en cette position intermédiaire.

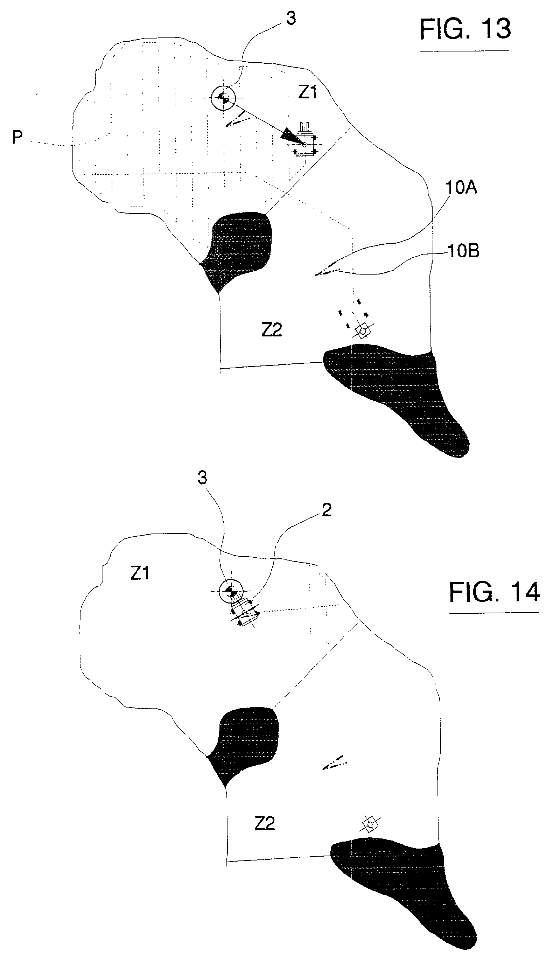

Une fois la pose de la cible auxiliaire terminé, le robot se déplace vers la zone Z1 pour effectuer un travail, par exemple de coupe, en suivant un parcours P prédéterminé par rapport au dispositif de localisation 3. (figure 13) La distance entre les références 10 des zones Z et Z2 est petite par rapport à la longueur du parcours P. Par exemple, le rapport longueur du parcours P/distance séparant la référence de la zone Z1 de la référence de la zone Z2 est supérieur à 10 :1, de façon avantageuse supérieur à 20 :1, de préférence supérieur à 50 :1. Au lieu d'utiliser le robot 2 pour calibrer le dispositif de localisation, on aurait également pu utiliser la cible auxiliaire 12.

Lorsque le travail est terminé, le robot 2 se déplace vers le dispositif de localisation avec les bras 4A,4B placés en position abaissée et en arrière pour permettre de placer les bras 4A,4B entre les pattes ou pieds du dispositif de localisation. Les bras sont alors soulevés pour permettre de déplacer le dispositif de localisation 3 par un mouvement du robot 2. (figure 14)

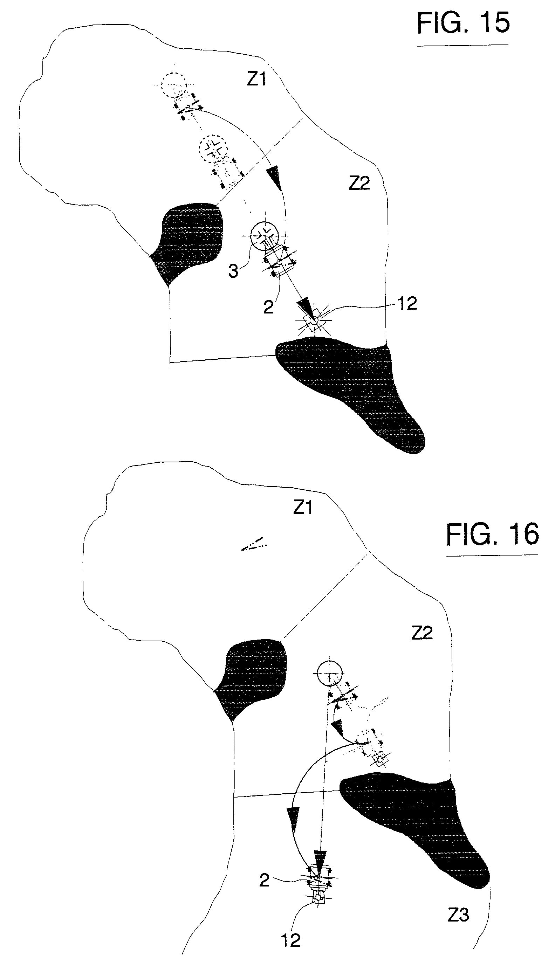

Le robot est ainsi déplacé vers la référence 10 de la zone Z2 (figure 15). Ce déplacement est facilité grâce à la cible auxiliaire 12 qui permet de guider le robot 2. Lorsque le robot est situé au dessus de la référence 10 de la zone Z2, le robot s'arrête et abaisse ses bras 4A,4B pour que les pattes ou pieds du dispositif de localisation prennent appui sur le sol de la zone Z2. On effectue alors une calibration en orientation du dispositif de localisation 2 en utilisant la cible auxiliaire 12. Le robot effectue alors une manoeuvre, telle qu'une marche avant avec les bras en position abaissée pour que le dispositif de localisation reste en place. Le robot effectue ensuite une manoeuvre pour inverser le sens de son déplacement. Le robot 2 avance maintenant avec les bras vers l'avant pour placer les bras 4A entre les pattes de la cible auxiliaire 12. Après relèvement des bras 4A, le robot 2 déplace vers la zone Z3, en particulier vers la référence 10 de la zone Z3 (figure 16). Lorsque le robot est situé au dessus de la référence 10 de la zone Z3, on calibre en orientation le dispositif de localisation. Après cette calibration, le robot continue à se déplacer dans la direction (dispositif de localisation - référence 10) sur une distance D1 (éventuellement égale à D). Après ce déplacement, les bras 4A,4B sont abaissés pour que les pattes de la cible auxiliaire 12 prennent appui sur le sol. Le robot effectue alors une manoeuvre ou un déplacement, telle qu'une marche arrière avec les bras abaissés pour laisser la cible 12 en place. Ensuite le robot se dirige vers la zone Z2 pour effectuer un travail selon un parcours prédéfini. En fin de travail, le robot s'associe au dispositif de localisation pour le déplacer vers la zone Z3. Ce déplacement est facilité par la cible auxiliaire qui permet au robot de se déplacer en ligne droite vers la cible auxiliaire 12 et donc vers la référence enterrée 10. La distance D ou D1 est avantageusement définie de manière à optimiser la calibration du dispositif de localisation, la cible auxiliaire 12 facilitant alors un déplacement rectiligne du robot vers la référence de la nouvelle zone où un travail doit être effectué.

Le procédé peut ainsi continuer en réitérant les étapes de déplacement de la cible auxiliaire, de calibration (de l'orientation) du dispositif de localisation, de travail de la zone, et de déplacement du dispositif de calibration.

Dans la description ci-avant, on a décrit des mouvements en marche avant et d'autres mouvements en marche arrière. Il est clair que de nombreux mouvements en marche avant peuvent être remplacés par des marches arrières, et vice-versa.

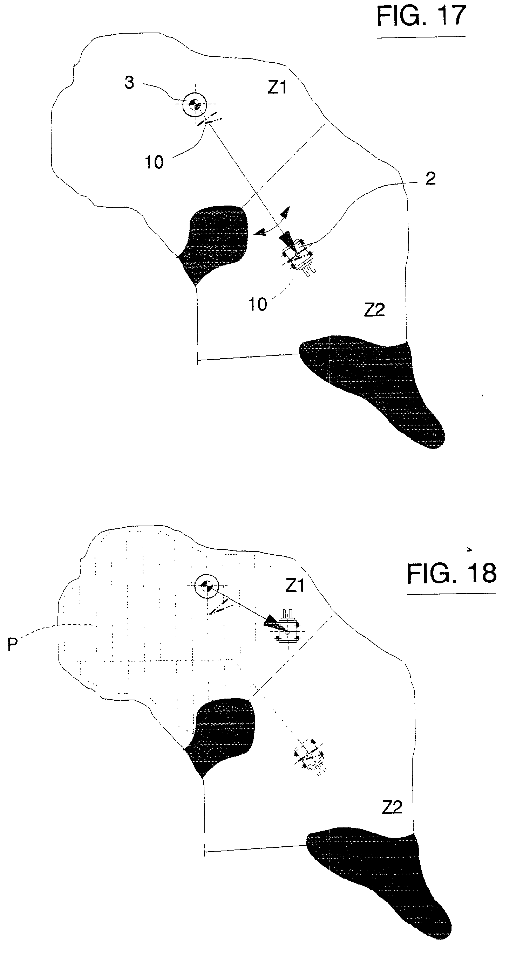

Enfin les figures 17 à 21 montrent schématiquement un autre procédé suivant l'invention. Dans ce procédé, on utilise un robot portant une cible et muni de bras 4A pour déplacer un dispositif de localisation 3, ce dispositif de localisation étant avantageusement muni d'un gyromètre fournissant une direction de référence constante pendant le court déplacement du robot d'une zone à une zone adjacente (par exemple pour calibrer l'orientation du dispositif de localisation ou pour déplacer le dispositif de localisation vers une autre zone).

Le robot se place au dessus de la référence 10 de la zone Z1 et débarque à ce moment le dispositif de localisation 3 (figure 17). Le robot se déplace alors vers la référence 10 de la zone Z2. Lorsque le robot 2 est au dessus de la référence 10 de la zone Z2, le robot s'arrête. La connaissance de la position exacte de la référence 10 permet alors de calibrer en orientation le dispositif de localisation 3.

Le robot 2 se déplace alors vers la zone Z1 pour effectuer un travail selon un parcours prédéfini P. (figure 18).

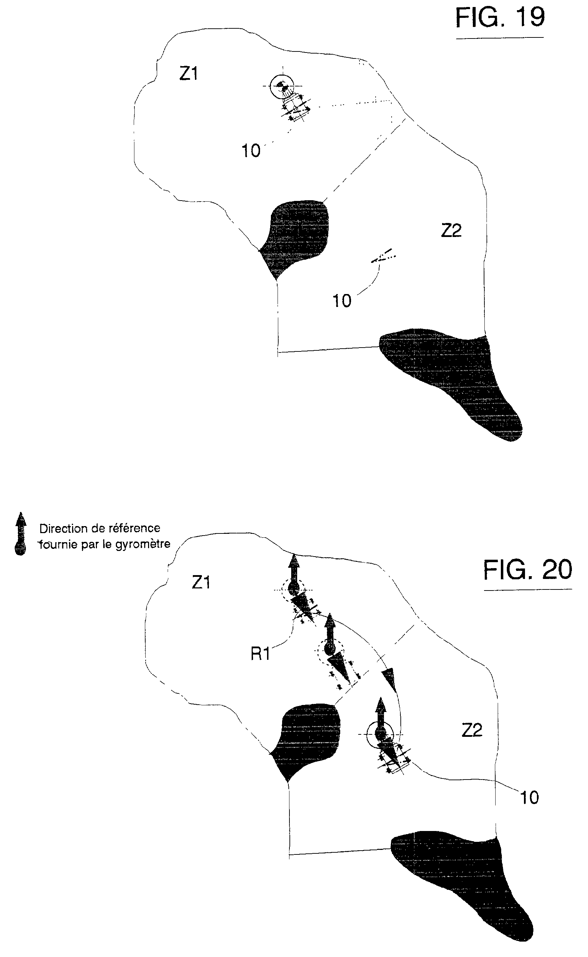

En fin de travail dans la zone Z1, le robot se dirige vers le dispositif de localisation 3 avec les bras en position abaissée pour les placer entre les pattes ou pieds du dispositif de localisation 3. (figure 19)

Après avoir relevé les bras 4A,4B, le robot se déplace vers la référence 10 de la zone Z2. Pour se faire, le robot utilise la direction de référence R1 fournie par le gyromètre du dispositif de localisation pour effectuer un déplacement dans une direction déterminée vers la référence 10 de la zone Z2. Cette direction est maintenu jusqu'au moment où le robot est situé au dessus de la référence 10 de la zone Z2. (figure 20)

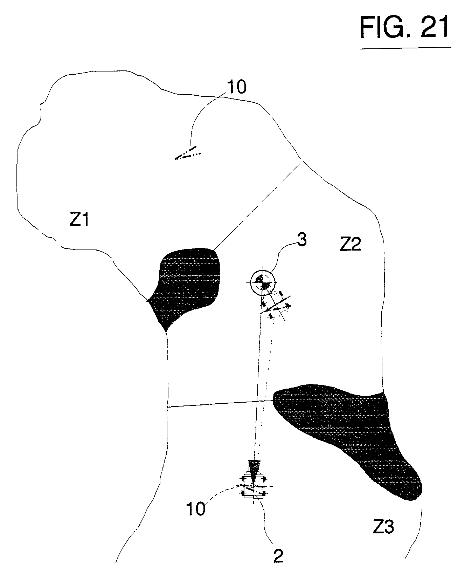

A cet endroit, le robot 2 s'arrête et les bras 4A,4B sont abaissés pour permettre au dispositif de localisation de prendre appui via ses pattes ou pieds sur le sol. Le robot effectue encore un petit mouvement (par exemple une petite marche arrière ou mouvement avec les bras du côté opposé au sens d'avancement du robot) dans une direction opposée pour que les bras ne soient plus situés entre les pattes du dispositif de localisation 3. Ensuite, le robot avec ses bras en position relevée effectue un mouvement dans la direction de la référence 10 de la zone Z3, cette direction de référence étant récupérée du gyromètre. (figure 21) Lorsque le robot est dans cette position, le robot s'arrête et on effectue la calibration du dispositif de localisation 3.

Le procédé continue ensuite par réitération des étapes décrites ci-avant.

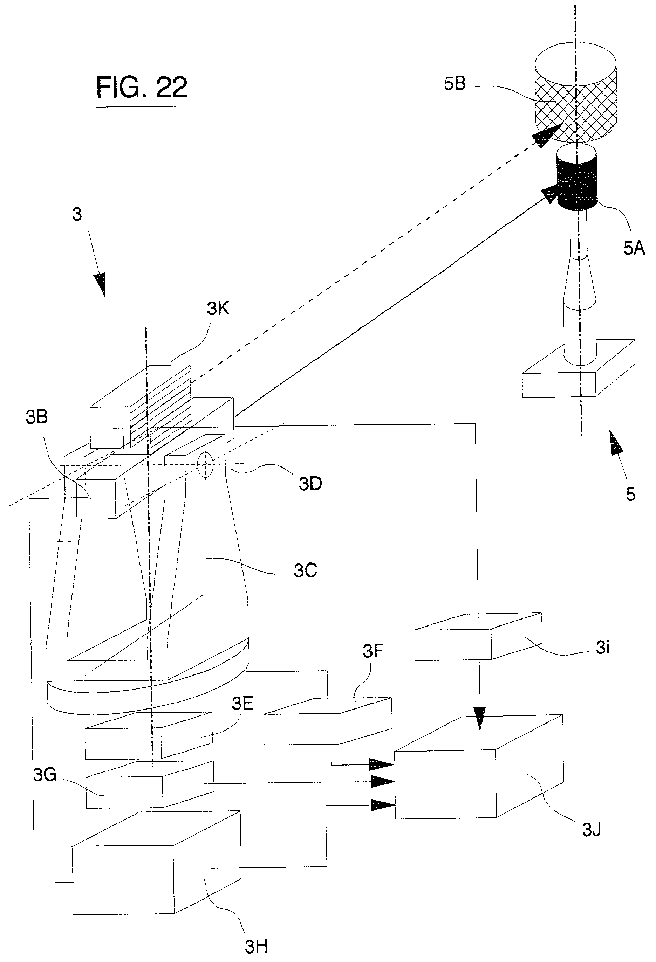

La figure 22 est une vue schématique d'un dispositif de localisation. Ce dispositif 3 est destiné à fonctionner avec une cible 5 montée sur le robot 2. La cible comporte un point lumineux 5A et un réflecteur omnidirectionnel 5B, par exemple pour télémètre laser.
Le dispositif de localisation 3 comporte :
- un télémètre laser 3K fonctionnant avec le réflecteur 5B de la cible;
- une caméra numérique 3B captant un signal lumineux du point lumineux 5A de la cible 5 ;
- une tourelle motorisé 3C montée à rotation par rapport à un axe vertical, ladite tourelle portant le télémètre et la caméra, ledit télémètre et ladite caméra étant montés à pivotement sur la tourelle, par rapport à un axe ou arbre horizontal 3D ;
- un gyromètre 3E dans l'axe vertical;
- un interface 3F recevant un signal de la tourelle et émettant un signal de commande vers la tourelle;
- un interface 3G recevant un signal du gyromètre et émettant un signal de commande vers le gyromètre ;
- une unité de traitement et d'analyse 3H d'image provenant de la caméra numérique ;
- une interface 3I recevant des signaux du télémètre et émettant un signal de commande vers le télémètre ; et
- une unité informatique 3J recevant les signaux des interfaces et émettant des signaux de commande vers les interfaces.

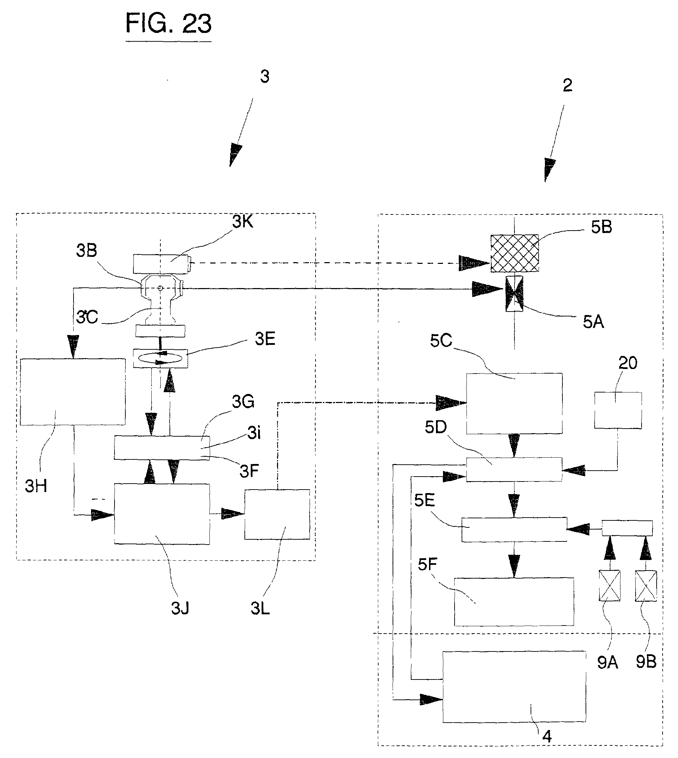

La figure 23 montre schématiquement les signaux qui sont échangés entre le dispositif de localisation avec gyromètre et le robot mobile.

Le robot mobile comporte
- un réflecteur 5B travaillant avec le télémètre 3K,
- une cible ou point lumineux 5A fonctionnant avec la caméra 3B,
- un récepteur radio 5C recevant des signaux d'un émetteur radio 3L du dispositif de localisation, cet émetteur recevant des signaux de l'unité de gestion informatique 3J ;
- une interface 5D recevant des signaux du récepteur 3C, ainsi que du système de levage 4 et de dispositifs de sécurité 20 et émettant des signaux de commande vers l'équipement de levage et vers une partie commande 5E, cette dernière recevant également des signaux du ou des capteurs de proximité 9 ;
- une partie moteur et servo direction 5F recevant des signaux de la partie commande 5E.

Les dispositifs de sécurité 20 peuvent être de nature diverse. Ces dispositifs sont par exemple constitués d'un ou de plusieurs dispositifs choisis parmi le groupe constitué de :
- détecteur d'obstacle ;
- caméra de visualisation reliée (par exemple par signaux radio) à un poste de contrôle avec un opérateur, avec ou sans dispositif de présence d'un opérateur audit poste de contrôle ;
- détecteur de renversement ;
- détecteur de choc ;
- détecteur de défaut de coupe ;
- détecteur de source de chaleur à proximité ;
- caméra thermique de détection, par exemple à infra rouge pour la détection de personnes ou d'animaux ;
- contrôle de la déviation du mouvement du robot par rapport au dispositif de localisation (par exemple arrêt du robot au cas où la déviation déterminée est supérieure à une tolérance donnée) ;
- laser ;
- détecteur ultra sonore de mouvement ;
- détecteur de bruit ;
- détecteur de pluie ;
- au cas où le dispositif de localisation ne détecte plus le robot (par exemple pendant un temps déterminé), un signal d'arrêt du robot est envoyé par exemple par onde radio ;
- détecteur de renversement du robot ;
- détecteur de variation de la référence ou du dispositif de localisation (par exemple par GPS ou par rapport à un dispositif de localisation fixe) ;
- etc.

Le robot comprend avantageusement une caméra de surveillance dont l'objectif est dirigé vers le sens d'avancement du robot mobile, cette caméra est alors relié par exemple à un dispositif de surveillance à distance.

Il est clair que de nombreuses modifications sont possibles dans les formes de réalisation représentées. Ainsi, par exemple le robot au lieu d'être un robot à roues auraient pu être un robot chenillé (partiellement ou totalement).
Les références 10 au lieu d'être du type en V auraient pu être des balises en T, en X, en Y, etc.
Bien que les références 10 sont de préférence enterrées, elles peuvent le cas échéant être au niveau du sol ou au dessus du niveau du sol. Des références peuvent le cas échéant être également formées par des obstacles.

Le télémètre laser aurait pu être remplacé par un dispositif de mesure de distance, tel qu'un télémètre ultrasonore.

Le dispositif de localisation représenté dans les exemples est du type à soulever.
Le dispositif aurait pu être du type tracté ou remorque, le robot étant alors avantageusement muni d'un système d'accrochage automatique. Le robot aurait également pu être muni d'un ou de bras articulés pour soulever le dispositif de localisation ou pour accrocher ce dispositif. Le dispositif de localisation est alors par exemple transporter le long d'un côté latéral du robot (côté situé entre le bord avant et le bord arrière). Ceci permet alors de déplacer le robot en avant même après avoir placé le dispositif de localisation (le dispositif de localisation étant placé le long d'un côté latéral ou du côté arrière du robot).

Le dispositif de localisation 3 aurait pu travailler par triangulation avec deux positions de référence pour la localisation du robot mobile.

Le dispositif de localisation représenté aux figures est assez volumineux.
Toutefois, il est clair que ce dispositif peut être avoir des dimensions plus réduites.

Dans le procédé suivant l'invention, il peut être utile d'utiliser un ou des système pour corriger l'élévation du dispositif de localisation. Une telle correction peut être effectuée au moyens de dispositifs de localisation de position connue.

Dans le procédé suivant l'invention, la cible auxiliaire permet également à contrôler l'orientation du dispositif de localisation. Par exemple, la cible auxiliaire permet de contrôler que le dispositif auxiliaire n'a pas été renversé ou n'est pas penché. Un tel contrôle peut être utilisé comme système de sécurité.

Le procédé suivant l'invention permet entre autre un ou plusieurs avantages choisis parmi :
- fonctionnement automatique avec un seul dispositif de localisation ;
- les zones de travail représentent de long parcours ou déplacements par rapport au déplacement du dispositif de localisation d'une zone à une zone adjacente ;
- traitement automatique de plusieurs zone distinctes ;
- le dispositif de localisation a une position fixe et donc stable durant le travail d'une zone par le robot mobile, ceci assurant une précision et une fiabilité de la localisation, un guidage ou localisation du robot dans une zone de travail sur un terrain irrégulier et/ou présentant un relief ;
- etc.

## Revendications

1. Procédé de guidage d'un robot mobile au moyen d'au moins un dispositif de localisation mobile,
- dans lequel ledit robot (2) amène en un point prédéterminé (10) d'une première zone (Z1) de travail le dispositif de localisation (3),
- dans lequel le robot (2) se sépare du dispositif de localisation (3),
- dans lequel on effectue un travail selon un parcours déterminé dans la première zone de travail (Z1) par rapport au dispositif de localisation (3) placé audit point prédéterminé (10),
- dans lequel on amène le robot (2) en fin de travail au voisinage du point déterminé de la première zone (Z1),
- dans lequel le robot (2) s'associe au dispositif de localisation (3) et l'amène en un point déterminé (10) d'une deuxième zone de travail (Z2),
- dans lequel le robot (2) se sépare du dispositif de localisation (3), et
- dans lequel on effectue un travail selon un parcours déterminé dans la deuxième zone de travail (Z2) par rapport au dispositif de localisation (3) placé audit point prédéterminé (10).

2. Procédé suivant la revendication 1, dans lequel le robot (2) amène, et de préférence on calibre, le dispositif de localisation (3) en un point d'une zone de travail (Z1) qui est prédéterminé par un système de référence.

3. Procédé suivant la revendication 2, **caractérisé en ce qu'**on utilise pour chaque zone de travail (Z1,Z2) un système de référence (10) situé au point auquel le dispositif de localisation doit être placé ou au point auquel le robot associé au dispositif de localisation s'arrête pour placer le dispositif de localisation.

4. Procédé suivant la revendication 2 ou 3, dans lequel on contrôle le mouvement du robot (2) associé au dispositif de localisation (3) entre le point de référence ou le système de référence d'une première zone et le point de référence ou le système de référence d'une deuxième zone au moyen d'un système de filoguidage (11) et/ou d'un système odométrique.

5. Procédé suivant l'une quelconque des revendications précédentes, **caractérisé en ce qu'**on calibre au moins l'orientation du dispositif de localisation (3) placé dans une zone (Z1) en déplaçant le robot mobile (2) par rapport au dispositif de localisation (3) vers un point ou un système de référence (10), de préférence d'une autre zone (Z2).

6. Procédé suivant l'une quelconque des revendications précédentes, **caractérisé en ce qu'**on calibre au moins l'orientation du dispositif de localisation (3) au moyen d'au moins deux références de position connue ou au moyen d'au moins deux dispositifs de localisation mobiles placés en des positions différentes.

7. Procédé suivant l'une quelconque des revendications précédentes, **caractérisé en ce que** le parcours de chaque zone de travail par rapport au point prédéterminé est prédéfini ou prémémorisé.

8. Procédé suivant l'une quelconque des revendications précédentes, **caractérisé en ce que** le robot (2) déplace une cible auxiliaire (12) hors de la zone de travail dans laquelle le dispositif de localisation (3) est placé, ladite cible auxiliaire servant à calibrer l'orientation du dispositif de localisation (3) et/ou à guider le robot (2) après avoir effectué le travail dans la zone de travail et/ou à contrôler l'orientation du dispositif de localisation (3).

9. Procédé suivant l'une quelconque des revendications précédentes, **caractérisé en ce qu'**on détermine une déviation du robot par rapport au dispositif de localisation (3) et **en ce qu'**on émet un signal de sécurité lorsque la déviation déterminée dépasse une tolérance.

10. Ensemble robotisé pour la mise en oeuvre d'un procédé suivant l'une quelconque des revendications précédentes, **caractérisé en ce qu'**il comporte :
- un robot mobile (2) muni d'au moins un moyen pour effectuer un travail dans une zone (Z1) ;
- un dispositif de localisation (3) indépendant du robot mobile (2);
- un moyen (4) pour associer le dispositif de localisation (3) au robot mobile (2) lors d'un déplacement de ce dernier et pour séparer le dispositif de localisation (3) du robot (2) avant un déplacement du robot,
- un moyen (5) porté par le robot mobile (2) recevant un signal du dispositif de localisation (3) lorsque ledit dispositif n'est pas associé au robot mobile,
- un moyen (7) porté par le robot mobile contrôlant le déplacement du robot dans une zone par rapport au dispositif de localisation (3) lorsque ce dernier est séparé du robot mobile (2), et
- un moyen (9) porté par le dispositif de localisation ou par le robot, ledit moyen détectant une position particulière d'une zone où le dispositif de localisation est séparé.

11. Ensemble suivant la revendication 10, **caractérisé en ce que** le robot mobile (2) comporte des moyens de levage (4) pour soulever et porter le dispositif de localisation (3) ou des moyen pour tracter le dispositif de localisation.

12. Ensemble suivant la revendication 10 ou 11, **caractérisé en ce qu'**il comporte une cible auxiliaire (12) assurant un calibrage du dispositif de localisation ou assurant une direction de déplacement pour le robot mobile associé au dispositif de localisation.

13. Ensemble suivant l'une des revendications 10 à 12, **caractérisé en ce qu'**il comporte au moins un système de sécurité.
